# EUROPEAN PATENT APPLICATION

(11) **EP 4 432 267 A1**
(43) Date of publication of application: **18.09.2024**
(21) Application number: 23162643.3
(22) Date of filing: 17.03.2023
(51) Int. Cl.: G09B 19/24, B23K 1/00, B23K 37/00

(54) **TEACHING TOOL FOR A WELDING TORCH, WELDING TORCH WITH SUCH A TEACHING TOOL AND METHOD FOR TEACHING A WELDING PATH OF A WELDING TORCH WITH SUCH A TEACHING TOOL**

(71) Applicant: FRONIUS INTERNATIONAL GmbH, 4643 Pettenbach (AT)
(72) Inventor: MA, Jun, Shanghai (CN)
(74) Representative: SONN Patentanwälte GmbH & Co KG

(57) **Abstract**

The invention relates to a teaching tool (1) for a welding torch (10) with a gas nozzle (11) with an opening (12) for a non-melting electrode (13) with a tip (14), especially a plasma welding torch (15), used in case of teaching a welding path (X) along a workpiece (W) of the welding torch (10) attached to a welding robot (16), comprising a substantially circularly symmetric body (2) having a free end (3), a welding torch (10) with such a teaching tool (1) and a method for teaching a welding path (X) of a welding torch (10) with such a teaching tool (1). The teaching tool (1) is characterized in that the body (2) is formed of an elastic material, and that the body (2) comprises a connector (4) arranged opposite the free end (3), which connector (4) is designed for tool-free fastening in the opening (12) of the gas nozzle (11) of the welding torch (10).

## Description

The invention relates to a teaching tool for a welding torch with a gas nozzle with an opening for a non-melting electrode with a tip, especially a plasma welding torch, used in case of teaching a welding path along a workpiece of the welding torch attached to a welding robot, comprising a substantially circularly symmetric body having a free end.

Furthermore, the invention relates to a welding torch for a non-melting electrode, especially a plasma welding torch, with a gas nozzle with an opening for the non-melting electrode, and with a device for mounting on a welding robot.

Finally, the invention relates to a method for teaching a welding path of a welding torch attached to a welding robot with an above mentioned teaching tool.

In robotic welding, especially for welding large workpieces, it is extremely difficult for operators to teach a weld because the sight from the welding nozzle is completely interrupted by the gas nozzle. As a result, it can not be judged whether the welding electrode is pointing to the weld joint or arc position and whether the distance between the nozzle and the workpiece is reasonable.

The present invention relates primarily, but not exclusively, to plasma welding wherein an arc is formed between a non-melting electrode and the workpiece. Plasma welding torches are relatively large, so visibility of the plasma gas nozzle during the teaching process is particularly limited or even blocked, making the teaching process very difficult. If the view of the welding torch is disturbed or even obstructed during the teaching process, it is not possible to judge whether the electrode is directed at the desired position on the welding track and whether the distance between the electrode or gas nozzle and the workpiece is suitable.

If the teaching process is performed with the normal welding torch with the non-melting electrode, there is also a risk of damaging the workpiece or parts of the welding torch, such as the gas nozzle or the electrode.

Special welding torches for use in the teaching process have become known from the prior art. For example, JPH0726061U describes a dummy contact tip which can be connected to the welding torch via screws. The dummy contact tip is made of elastic material and its dimensions correspond to those of the real electrode.

Another teaching tool for a welding robot for MIG/MAG welding process is shown in JPH0726062U. The teaching tool is detachable screwed to the torch and contains a compressing spring or a rubber plate spring.

Known elements of this type for use in the teaching process of a welding torch often have a complex design or are complex to mount and dismount on the welding torch.

Therefore, the object of the present invention is to create a teaching tool for a welding torch with a non-melting electrode, especially a plasma welding torch, which can be mounted on and removed from the welding torch particularly easily and quickly, and which has a particularly simple and cost-effective design. A further object of the present invention is to provide a welding torch for a non-consuming electrode, in particular a plasma welding torch, and a method for teaching the welding path of a weld with such a welding torch, whereby the teach-in operation can be performed simply, safely and without risk of damage to the workpiece or parts of the welding torch. Disadvantages of known devices and methods are to be avoided or at least reduced.

The object of the present invention is solved, on the one hand, by a teaching tool mentioned above, in which the body is formed of an elastic material, and that the body comprises a connector arranged opposite the free end, which connector is designed for tool-free fastening in the opening of the gas nozzle of the welding torch. According to the invention, the teaching tool thus consists of an elastic material, which on the one hand can prevent damage to the workpiece during the teaching process. On the other hand, the teaching tool can thus be attached to the welding torch and removed again particularly quickly and easily.

The elastic material of the teaching tool and the corresponding dimensioning allow the teaching tool to be held in the gas nozzle by friction and no fastening elements and no tools are required for assembly and disassembly. The non-melting electrode of the welding torch does not have to be removed during the changeover for the teaching process, but can also just be moved inside the gas nozzle so that space is created for the teaching tool at the opening of the gas nozzle. The teaching tool is also particularly simple and thus inexpensive to manufacture.

According to a further feature of the invention, the connector of the teaching tool is formed by a truncated cone. This design facilitates the placement of the teaching tool in the opening of the gas nozzle of the welding torch and the holding of the same by friction.

Preferably an average diameter of the connector, especially an average diameter of the truncated cone, is slightly larger than the diameter of the opening of the gas nozzle of the welding torch. Such dimensioning ensures that the teaching tool is held securely in the opening of the gas nozzle by friction. Preferably the average diameter of the connector, especially the average diameter of the truncated cone, is 4 to 8 % larger than the diameter the opening of the gas nozzle of the welding torch.

If a flange with a larger diameter than the connector is arranged between the connector and the free end of the body of the teaching tool, it can be ensured that the teaching tool is attached to the gas nozzle in the desired position. On the one hand, the flange prevents the teaching tool from tilting relative to the gas nozzle and, on the other hand, a defined distance of the tip of the teaching tool from the end of the gas nozzle is always ensured. This ensures a proper Tool Center Point (TCP) during the teaching process.

Especially the body of the teaching tool is made in one piece. This allows the teaching tool to be produced very easily and cost-effectively.

If the elastic material of the body of the teaching tool contains graphitic carbon, in particular 30 to 40 volume percent, the wear resistance of the material can be increased and thus its service life. For a teaching tool made of common silicone rubber, the wear resistance will be greatly weakened after 4 times use. Adding some graphitic carbon to the silicone rubber matrix increases the lifetime of the teaching tool by 10 times or more. The graphitic carbon can be admixed to the silicone rubber matrix in form of a powder and/or in form of powder composites.

Advantageously, the elastic material of the body has a shore hardness of 40 to 50 Shore A, in particular 45 to 48 Shore A. Such hardness values are advantageous for the application of the teaching tool and the hold in the opening of the gas nozzle.

According to another feature of the invention, the elastic material of the body has an Elastic modulus of 7.8 to 12 MPa, in particular 9.8 to 10 MPa.

Suitable materials for the body of the teaching tool are rubber or rubber compounds, especially silicone rubber. Such materials with the above-mentioned features are used to match friction, hardness, wear resistance and elasticity. Silicone rubber shows an ideal performance of elasticity and heat resistance even at temperatures up to 150 °C and more. Furthermore, silicone rubber has a shore hardness of 10 - 80 degrees and an Elastic modulus of 8 MPa (???) when the elastic hardness is 40 Shore A, therefore a little elastic deformation can generate an enough extrusion force, to obtain the friction between the teaching tool and the metal surface of the gas nozzle. The friction force is calculated by f = µ * N, wherein f is the friction, µ is the coefficient of friction (0.25 between copper and silicon rubber) and N the normal force. As a result, the friction f is proportional to the normal force N and elastic deformation. In this case, a deformation of 0.2 mm - 0.4 mm of the silicone rubber is enough to generate the friction f to overcome the gravity.

If fluorescent particles are admixed to the elastic material or the body is at least partially surrounded with a fluorescent top or cover layer, the visibility of the teaching tool during the teaching process can be increased. The fluorescent teaching tool can be an advantage for the operator, especially in dark operating environments.

According to another feature of the invention, the free end of the body of the teaching tool has a rounding, in particular with a diameter of 0.4 to 0.6 mm. Such a radius has proven to be suitable in practice in terms of wear resistance of the tip.

The object of the present invention is also solved by a welding torch for a non-melting electrode, especially a plasma welding torch, with a gas nozzle with an opening for the non-melting electrode, and with a device for mounting on a welding robot, mentioned above, whereby a teaching tool described above is provided and fastened in the opening of the gas nozzle. Please refer to the above description of the teaching tool for the advantages achievable thereby.

Finally, the object of the present invention is also solved by an above-mentioned method for teaching a welding path of a welding torch attached to a welding robot with an above mentioned teaching tool, wherein the desired welding path is traversed with the welding torch on which the above described teaching tool is fastened. For the advantages that can be achieved by this method, please refer to the description of the teaching tool above.

Advantageously, a contact of the teaching tool with a workpiece is detected and the teaching of the welding path is corrected accordingly.

The contact of the teaching tool with the workpiece can be detected via a force detected at the welding robot or via an electrical measuring voltage at the teaching tool. The force acting on the teaching tool can be detected, for example, via a force measuring device usually present on the robot. In the latter case, a certain electrical conductivity of the teaching tool is required, which can be realized, for example, by adding conductive particles (for example, graphite, nickel-clad copper powder and/or silver powder) to the elastic material of the body of the teaching tool or by encasing the body of the teaching tool with an electrically conductive material. In a further embodiment, the body is at least partially surrounded by an electrically conductive cover layer. The electrically conductive cover layer can be applied by brushing, spraying, dipping or other coating methods.

The present invention is explained in more detail with reference to the appended figures.
- Fig. 1: shows a plasma welding torch which can be mounted on a welding robot according to the prior art in simplified representation;
- Fig. 2: shows a first embodiment of the teaching tool in detail;
- Fig. 3: shows a second embodiment of the teaching tool;
- Fig. 4: shows a third embodiment of the teaching tool with cylindrical connector and rounding of the free end;
- Fig. 5: shows a fourth embodiment of the teaching tool with a fluorescent top layer;
- Fig. 6: shows a sectional view of a fifth embodiment of the teaching tool;
- Fig. 7: shows a sectional view of a sixth embodiment of the teaching tool;
- Fig. 8: shows a partial sectional view of a gas nozzle with a teaching tool according to the invention according to the second embodiment as shown in Fig. 3;
- Fig. 9: shows a partial sectional view of another gas nozzle with a teaching tool according to the invention according to the second embodiment as shown in Fig. 3; and
- Fig. 10: shows a partial sectional view of another gas nozzle with a teaching tool according to the invention according to the sixth embodiment as shown in Fig. 7.

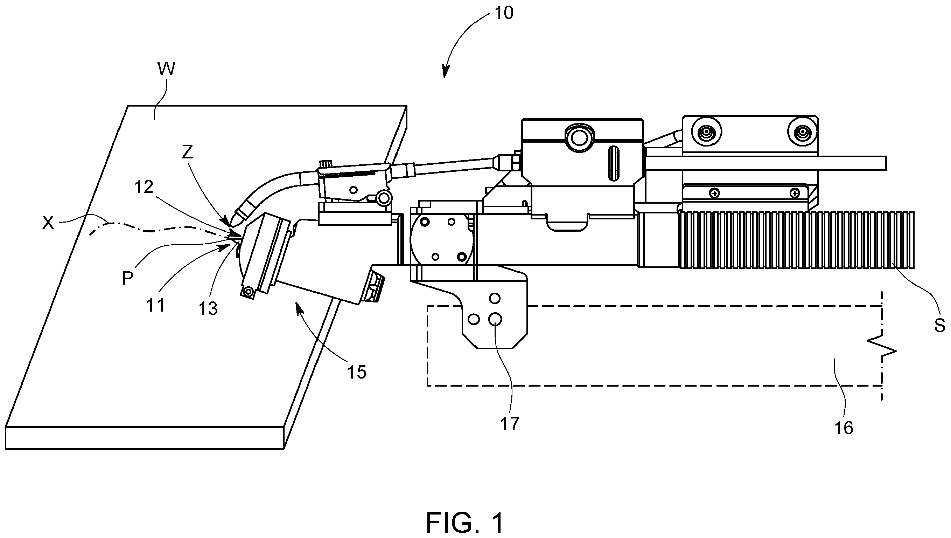

Fig. 1 shows a welding torch 10, especially a plasma welding torch 15 with a device 17 for mounting on a welding robot 16 (not shown) according to the prior art in simplified representation. The plasma welding torch 15 includes a gas nozzle 11, having an opening 12, and a non-melting electrode 13 usually made of tungsten. Based on the welding torch design the non-melting electrode 13 can protrude or not. The various electrical cables and cooling lines (not shown) are fed to the plasma welding torch 15 via a hose package S. In the figure above the plasma welding torch 15 is fed a filler material Z to the welding point P, with which the welding of a workpiece W along a welding path X is carried out. Before the welding process is carried out, a so-called teaching process is usually carried out, in which the movement of the welding robot 16 is determined so that the subsequent welding process is carried out along the desired welding path X. During the teaching process, there is a risk of damage to the workpiece W or to components of the plasma welding torch 15, in particular to the non-melting electrode 13, if the distance between the plasma welding torch 15 and the workpiece W is selected to be too small. This problem is to be eliminated by the present invention.

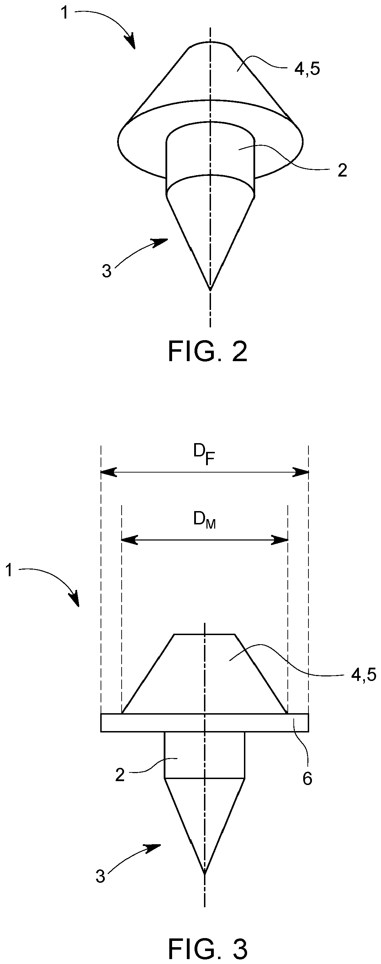

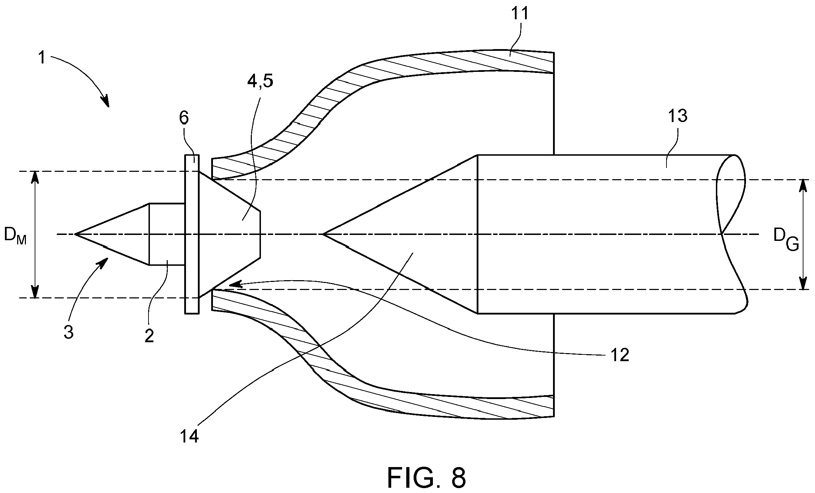

Fig. 2 shows a first embodiment of the teaching tool 1 in detail. The teaching tool 1 comprises a substantially circularly symmetric body 2 having a free end 3, wherein the body 2 is formed of an elastic material, for instance rubber or rubber compound, especially silicon rubber. Further, the body 2 of the teaching tool 1 comprises a connector 4 arranged opposite the free end 3, which connector 4 is designed for tool-free fastening in the opening 12 of a gas nozzle 11 of a welding torch 10 (see Fig. 1). In this embodiment, the connector 4 of the body 2 is formed by a truncated cone 5, which makes it easier to fasten the teaching tool 1 within the opening 12 of a gas nozzle 11 (see Fig. 8). The diameter D_{A} of the connector 4 (see Fig. 3) is slightly larger than the diameter D_{G} of the opening 12 of the gas nozzle 11 of the welding torch 10 so that the teaching tool 1 holds by friction only within the gas nozzle 11 (see Fig. 8).

Fig. 3 shows a second embodiment of the teaching tool 1, wherein a flange 6 with a diameter D_{F}, which is larger than the maximum diameter D_{M} of the connector 4 is arranged between the connector 4 and the free end 3 of the body 2. By the flange 6, which is a kind of limitation of the teaching tool 1, it can be ensured that the teaching tool 1 is attached to the gas nozzle 11 in the desired position. The flange 6 prevents the teaching tool 1 from tilting relative to the gas nozzle 11 and a defined distance of the tip of the teaching tool 1 from the end of the gas nozzle 11 is always ensured.

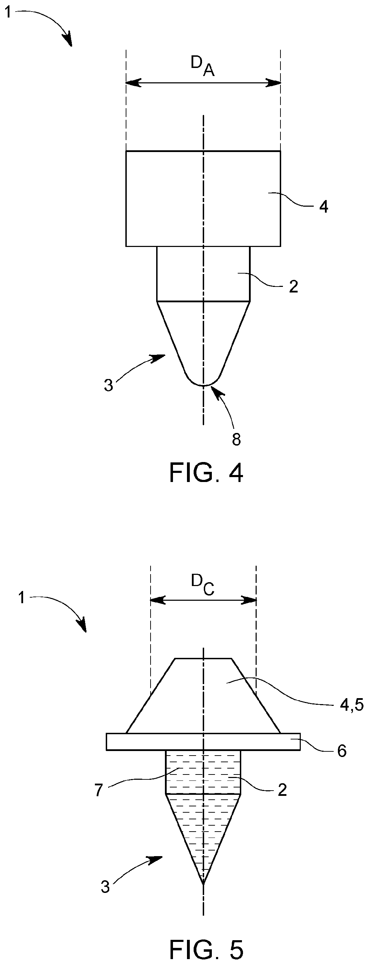

Fig. 4 shows a third embodiment of the teaching tool 1 with cylindrical connector 4 with an outer diameter D_{A}, which is slightly, preferably 4 % to 8 %, larger than the diameter D_{G} of the opening 12 of the gas nozzle 11. The tip on the free end 3 of the body 2 shows a rounding 8, in particular with a diameter of 0.4 to 0.6 mm.

Fig. 5 shows a fourth embodiment of the teaching tool 1, which corresponds in all other respects to the embodiment according to Fig. 3. The connector 4 is formed by a truncated cone 5 whose average diameter D_{C} is slightly larger than the diameter D_{G} of the opening 12 of the gas nozzle 11. In this embodiment, the body 2 of the teaching tool 1 is at least partially surrounded with a fluorescent top layer 7. The fluorescent top layer 7 can be applied by brushing, spraying, dipping or other coating methods. Alternatively to a fluorescent top layer 7, also fluorescent particles can be admixed to the elastic material of the body 2 of the teaching tool 1. The fluorescent top layer 7 can improve the visibility of the teaching tool 1 during the teaching process.

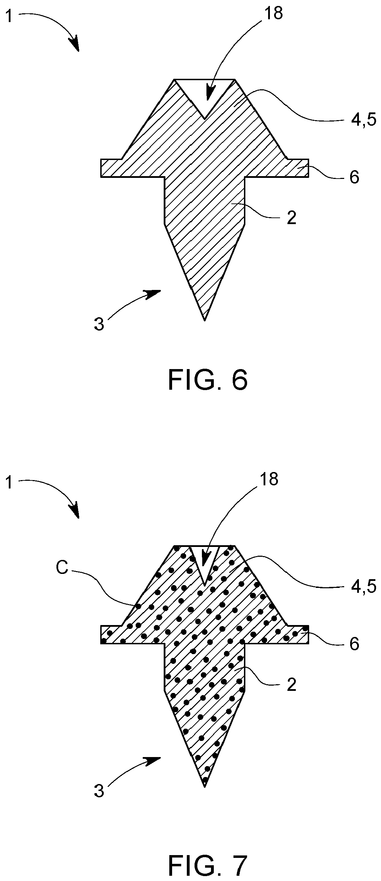

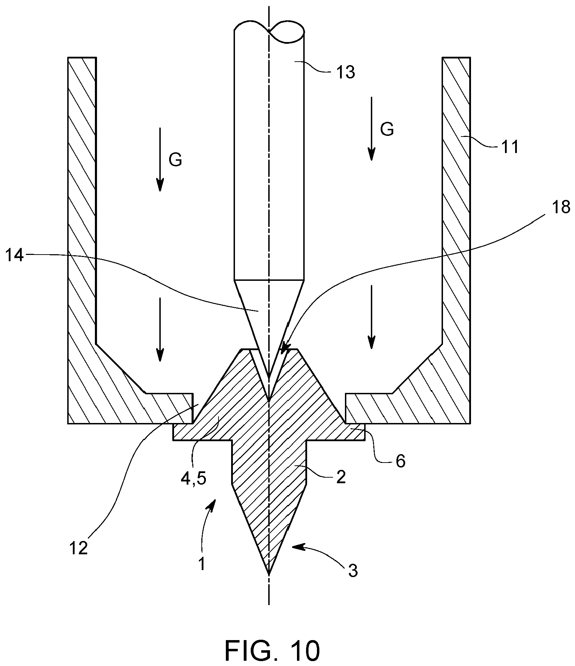

Fig. 6 shows a sectional view of a fifth embodiment of the teaching tool 1, similar to the embodiment according to Fig. 3. The only difference is a recess 18 on the connector 4 opposite the free end 3 of the body 2 of the teaching tool 1, in which the tip of the non-melting electrode 13 of the welding torch 10 can be placed during the teaching process (see Fig. 10). The recess 18 is correspondingly adapted to the shape of the tip of the non-melting electrode 13.

Fig. 7 shows a sectional view of a sixth embodiment of the teaching tool 1. The angle of the recess 18 is smaller than that of the recess 18 according to Fig. 6. If the elastic material of the body 2 of the teaching tool 1 contains graphitic carbon C, on the one hand, the wear resistance and thus service life of the teaching tool 1 can be increased. On the other hand, this or the addition of other conductive particles (like nickel-clad copper powder or silver powder) can make the teaching tool 1 electrically conductive. This means that contact between the welding torch 10 or the teaching tool 1 and the workpiece W can be detected by means of short-circuit detection. For this purpose, a measuring voltage U_{M} is applied to the teaching tool 1 via the gas nozzle 11 and detected via a voltage drop when the free end 3 of the teaching tool 1 comes into contact with the conductive workpiece W. In case of a contact, an acoustically signal and/or a visually signal can be emitted.

Fig. 8 shows a partial sectional view of a gas nozzle 11 with a teaching tool 1 according to the invention according to the second embodiment as shown in Fig. 3. The gas nozzle 11 has an opening 12 with a diameter D_{G}. The non-melting electrode 13 can remain in the gas nozzle 11 during the teaching process and is merely moved backwards. This facilitates handling during the teaching process. The teaching tool 1, whose maximum diameter D_{M} of the connector 4 is slightly larger than the diameter D_{G} of the opening 12 of the gas nozzle 11, is inserted into the opening 12 of the gas nozzle 11. Due to the elastic material of the body 2 of the teaching tool 1, the teaching tool 1 can simply be inserted into the opening 12, where it holds due to friction. The flange 6 prevents the teaching tool 1 from tilting relative to the gas nozzle 11 and ensures that the distance between the end of the gas nozzle 11 and the tip at the free end 3 of the teaching tool 1 is correct.

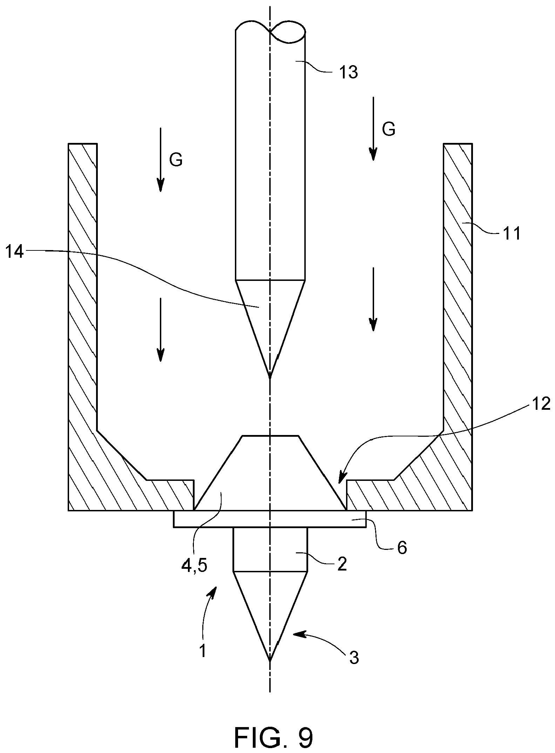

Fig. 9 shows a partial sectional view of another gas nozzle 11 with a teaching tool 1 according to the invention according to the second embodiment as shown in Fig. 3. The arrows G show the path of the inert gas G inside the gas nozzle 11 during the welding process.

Finally, Fig. 10 shows a partial sectional view of another gas nozzle 11 with a teaching tool 1 according to the invention according to the sixth embodiment as shown in Fig. 7. Here, the tip of the non-melting electrode 13 can be arranged in the recess 18 on the connector 4 of the teaching tool 1 during the teaching procedure.

With the aid of the described teaching tool 1, the teaching process can be improved and the risk of destruction of the workpiece W or components of the welding torch 10 can be minimized or prevented.

## Claims

1. Teaching tool (1) for a welding torch (10) with a gas nozzle (11) with an opening (12) for a non-melting electrode (13) with a tip (14), especially a plasma welding torch (15), used in case of teaching a welding path (X) along a workpiece (W) of the welding torch (10) attached to a welding robot (16), comprising a substantially circularly symmetric body (2) having a free end (3), **characterized in that** the body (2) is formed of an elastic material, and that the body (2) comprises a connector (4) arranged opposite the free end (3), which connector (4) is designed for tool-free fastening in the opening (12) of the gas nozzle (11) of the welding torch (10).

2. Teaching tool (1) according to claim 1, **characterized in that** the connector (4) is formed by a truncated cone (5).

3. Teaching tool (1) according to claim 1 or 2, **characterized in that** an average diameter (D_{A}) of the connector (4), especially an average diameter (D_{C}) of the truncated cone (5), is slightly larger than the diameter (D_{G}) of the opening (12) of the gas nozzle (11) of the welding torch (10).

4. Teaching tool (1) according to claim 3, **characterized in that** the average diameter (D_{A}) of the connector (4), especially the average diameter (D_{C}) of the truncated cone (5), is 4 to 8 % larger than the diameter (D_{G}) the opening (12) of the gas nozzle (11) of the welding torch (10).

5. Teaching tool (1) according to one of claims 1 to 4, **characterized in that** a flange (6) with a larger diameter (D_{F}) than the connector (4) is arranged between the connector (4) and the free end (3) of the body (2).

6. Teaching tool (1) according to one of claims 1 to 5, **characterized in that** the body (2) is made in one piece.

7. Teaching tool (1) according to one of claims 1 to 6, **characterized in that** the elastic material of the body (2) contains graphitic carbon (C), in particular 30 to 40 volume percent.

8. Teaching tool (1) according to one of claims 1 to 7, **characterized in that** the body (2) is made of rubber or rubber compound, especially silicone rubber.

9. Teaching tool (1) according to one of claims 1 to 8, **characterized in that** fluorescent particles are admixed to the elastic material, or the body (2) is at least partially surrounded with a fluorescent top layer (7).

10. Teaching tool (1) according to one of claims 1 to 9, **characterized in that** the free end (3) of the body (2) has a rounding (8), in particular with a diameter of 0.4 to 0.6 mm.

11. Welding torch (10) for a non-melting electrode (13), especially a plasma welding torch (15), with a gas nozzle (11) with an opening (12) for the non-melting electrode (13), and with a device (17) for mounting on a welding robot (16), **characterized in that** a teaching tool (1) according to one of claims 1 to 10 is provided and fastened in the opening (12) of the gas nozzle (11) .

12. Method for teaching a welding path (X) of a welding torch (10) attached to a welding robot (16) with a teaching tool (1), **characterized in that** the desired welding path (X) is traversed with the welding torch (10) on which the teaching tool (1) according to one of claims 1 to 10 is fastened.

13. Method according to claim 12, **characterized in that** a contact of the teaching tool (1) with a workpiece (W) is detected and the teaching of the welding path (X) is corrected accordingly.

14. Method according to claim 12, **characterized in that** the contact of the teaching tool (1) with the workpiece (W) is detected via a force (F) detected at the welding robot (16).

15. Method according to claim 13 or 14, **characterized in that** the contact of the teaching tool (1) with the workpiece (W) is detected via an electrical measuring voltage (U_{M}) at the teaching tool (1).
